# EUROPEAN PATENT SPECIFICATION

(11) **EP 1 584 738 B1**
(45) Date of publication and mention of the grant of the patent: **23.11.2011**
(21) Application number: 04425240.1
(22) Date of filing: 01.04.2004
(51) Int. Cl.: D06Q 1/10, G02B 5/128

(54) **Method for producing a printed high-visibility product**
Verfahren zur Herstellung von gedruckten Produkten mit hoher Sichtbarkeit
Procédé de production de produits imprimés à haute visibilité

(43) Date of publication of application: 12.10.2005
(73) Proprietor: Industria Bergamasca Rifrangenti S.r.l., 24040 Scanzorosciate (BG) (IT)
(72) Inventor: Bartoli, Cesare, 24040 Scanzorosciate (BG) (IT)
(74) Representative: Garavelli, Paolo

(56) References cited:
- WO-A-02/103108
- WO-A-03/062869
- US-A- 5 785 790

## Description

The present invention refers to a method for producing printed retroreflective high-visibility products.

It is verified that retroreflective products used for safety garments can reduce the risk of accidents, especially for people who live in an outdoor society, fireman, paramedics, police and every adult and child that is biking, hiking, running, playing or walking. Safety vests displaying a retroreflective strip often are worn by road construction workers to improve visibility to oncoming motorists.

The technical characteristics of high visibility retro-reflective jackets and sashes which must be worn by the drivers of vehicles which are stationary on the roadway refer to unifying standard UNI EN 471:1994 on high visibility warning clothing. Technical requirements should be indicated on the label of the safety vest. To avoid imitations and forgery and to protect the producer of the retroreflective trim, the solution which is described in this invention refers to a printed brand which is visible upon the product, under the glass beads layer, washing resistant and, above all, the printed design does not modify the retroreflective characteristics required by the EN 471.The photometric and colorimetric characteristics of the material of the present invention comply with the provisions of the same international standard EN 471. No colored printing remains upon the glass beads.

The commercial products suitable for reflective garments have generally been single colored. For example in US-A-4.763.985, US-A-5.283.101, US-A-5.738.746 launderable retroreflective gray metal colored structures are disclosed. A retroreflective structure described in US-A-5.962.121 is capable of exhibiting a decorative effect both daytime and night time and particularly a rainbow colored effect. In US-A-4.605.461 a method is described for transferring a retroreflective pattern onto a fabric. Retroreflective images formed on garments and other substrates are described in US-A-4.102.562. US-A-5.508.105 discloses a thermal printing system and a resin-based colorant/binder for printing frangible, retro-reflective polymeric sheeting material. US-A-5.620.613 discloses retroreflective multi-colored designs or emblems on garments comprising a monolayer of transparent microspheres, a color layer with colorant in a transparent resin screen printed over the glass beads. When the prints of the first color are all dried, they may be printed and dried with subsequent colors until all the desired colored portions of the image are complete for decorating textile surfaces with a transfer. US-A-5.679.198 discloses a printing step on a support sheet that has a layer of microspheres embedded therein, one or more colored layers that are prepared from a polyester resin and an isocyanate hardener, drying each color layer separately before the next layer is printed. The process for decorating textile surfaces with images comprising light-reflecting areas is described in US-A-5.785.790. In this case, the layer of glass microspheres are printed by one or more coatings of two-component colors based on polyester resin and isocyanate hardener. A silk screen-printing machine is used for printing the layers in an image wise inverted fashion on the support sheet of the glass beads.

Many other patents (US-A-3.689.346, US-A-5.643.400, US-A-4.082.426, US-A-2.231.139, US-A-2.422.256, US-A-4.656.072, US-A-4.952.023) describe processes for producing retroreflective materials having printed patterns or graphics formed thereon. US-A-6.120.636 discloses a higher speed, low cost process for producing printed patterns for graphic, decorative and other retroreflective sheeting using partially cured pattern printed on a roll of film produced with a rotary screen printing station and UV curing.

WO 02/103108 A discloses a method according to the preamble of Claim 1.

Insofar as known, no-one has previously found a practical and useful way to produce a printed retroreflective product which can maintain the homogenous gray color if desired and, consequently, maintain a high retroreflective value as required by EN 471 standard, with a continuous light visible pattern on the retroreflective surface. The printed effect should avoid imitations and forgery, protect the producer of the retroreflective trim and give a guarantee to the customer. Of course, in this invention, we can obtain a multicolored effect as desired, independently of an homogenous gray color.

In this invention, a temporary support sheet is covered with a monolayer of transparent glass microspheres having an average diameter in the range of about 30 to 200 microns and a refractive index of about 1.5 to 2.0. The beads are partially embedded in a layer of self-adhesive or softened polymer adhesive to a depth averaging between 20% and about 50% of their diameters and coated with a reflecting aluminum layer covering the surface of the glass microspheres as described in US-A-3.700.305 and US-A-6.416.188 and the surface between the microspheres. On a realized paper, a transparent polyurethane two-component resin is coated dried and laminated with the printed fabric. The polyurethane coating is dried detached from the silicon paper and the two faces of the polymer are laminated with the temporary support sheet and with the printed textile base.

Regarding the printing method of the textile base, the above-described state of the art discloses the screen-printing technology (US-A-5.620.630, US-A-5.785.790 and other). Besides, the screen printing technology is generally used on textile products. The same considerations may be done with rotary screen-printing (US-A-6.120.636). A sublimating pigments printed method from a paper base to the synthetic textile base can be used: then the support sheet of the beads is pulled off. The aluminum layer between the spheres remains on the support sheet. The base printed textile with the transferred glass beads should be cured.

The above and other objects and advantages of the invention, as will appear from the following description, are obtained by a method as claimed in Claim 1. Preferred embodiments and non-trivial variations of the present invention are claimed in the dependent Claims.

The present invention will be better described by some preferred embodiments thereof, provided as a nonlimiting example, with reference to the enclosed drawings, in which:
- Fig. 1 shows a schematic carrier web 9, which secures microspheres thereon in a desired temporary arrangement;
- Fig. 2 is a view of the partially removed film 9 from the carrier printed web, which secures microspheres covered with a vapor coating of a metal such as aluminum light reflecting material 2 but without reflective aluminum between the spheres 1 after removing the self-adhesive paper 4;
- Fig. 3 is a schematic plan view showing an article in accordance with the present invention having a fabric 8 printed with the pattern "i b r" with a retroreflective layer thereto;
- Fig. 4 is a microscopic plan view showing the portion of letter "i" in fig. 3 of the retroreflective fabric 8. The black color of the letter "i" is visible around the glass microspheres; and
- Fig. 5 shows an article of clothing, displaying a retroreflective trim in accordance with the present invention.

The above figures, which are idealized, are not to scale and are intended to be merely illustrative and nonlimiting of the present invention.

In the invention as described and shown, a specific terminology is used for better clarity. However, the invention is not constrained to the specific terms being chosen and it is obvious that every chosen term comprises every technical equivalent that generates a similar behavior.

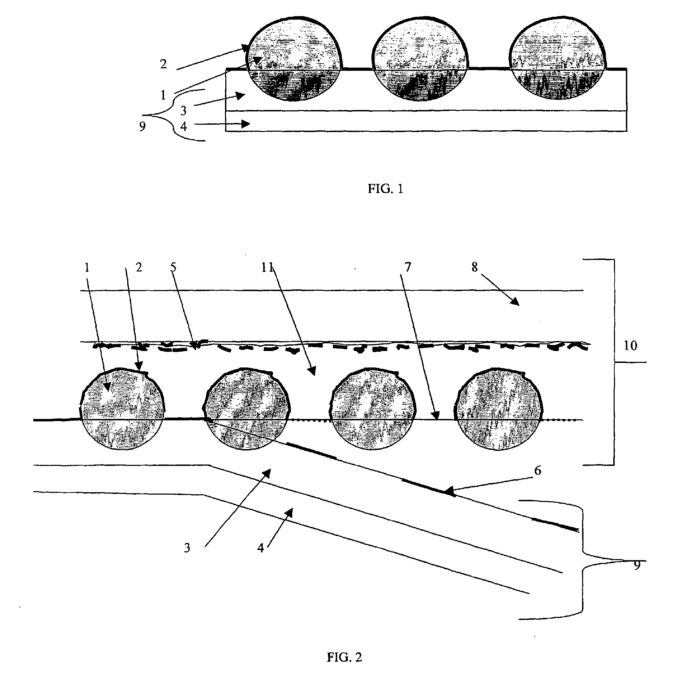

Fig. 1 is a cross sectional view of the carrier web, which secures glass microspheres 1 on a temporary transport support carrier sheet 9. The carrier sheet used as a sheet material is produced as described in US-A-4.102.562 and in Example 2 of US-A-4.075.049. The microspheres used in the present invention typically have an average diameter in the range of about 30 to 150 microns and a refractive index of about 1.7 to 2.0. Preferably glass microspheres 1 are arranged substantially in a monolayer on the temporary carrier sheet 9, which comprises a polymeric coating 3 and a stiff backing 4. The polymeric coating 3 is a softenable material such as polyethylene or modified polyvinyl acetate - polyethylene, polypropylene and the like, or a self-adhesive polyacrylate polymer. The stiff backing 4 could be kraft paper, polyester film and the like. The microspheres may be arranged upon the temporary carrier sheet 9 by printing, cascading, transferring, and screening or any convenient transfer process. The microspheres 1 are embedded in the carrier sheet 9 with a pressure roll or by heating the softened polymer, preferably to a depth between about 20 to 40 percent of their average diameter.

With reference again to Fig. 1, the glass beads 1 are covered with a single layer of aluminum 2 as described in US-A-5.650.213.

A retroreflective printed transfer material 10 as shown in Fig. 2 illustrates a idealized, not to scale sectional view of portion of an article of printed fabric at the final stage of production or use in accordance with the present invention. In the drawing, the end product 10 is partially delaminated from the carrier web 9 comprising the polymeric self-adhesive or softenable polyethylene-poly-vinyl-acetate adhesive coating 3 and the kraft paper or polyester film. Incidentally, the aluminum deposited on the resin layer 11 between the glass beads 1 is removed by the polymeric adhesive 3 of the temporary carrier sheet 9 as indicated with arrow 6 .

The base fabric 8 is printed with the design 5. With reference again to Fig. 2, finally, a binder layer of two-component polyurethane adhesive 11 provides an adequate adhesion of the glass beads 1 to the fabric 8, for example a polyester/cotton fabric, a polyester nonwoven base, a nylon knitted fabric as Lycra® and other textile bases.

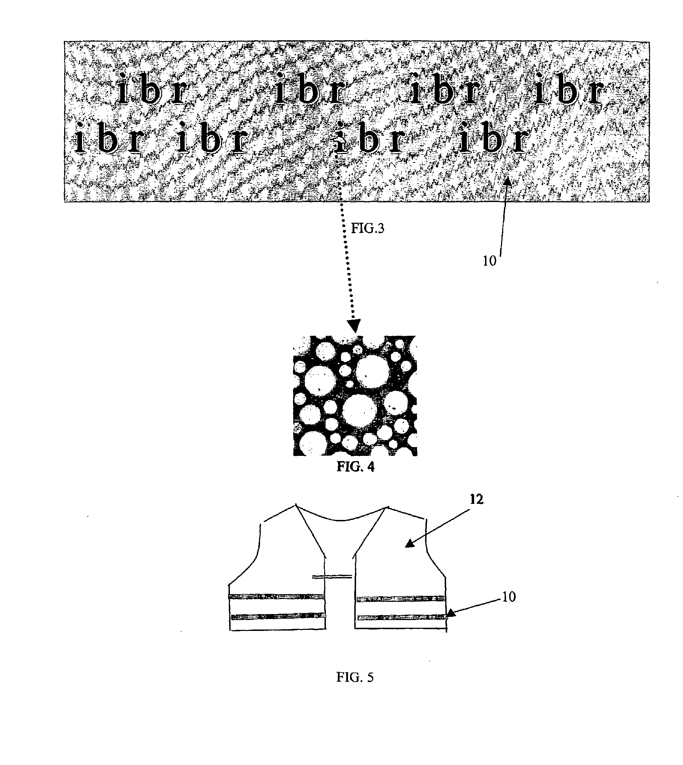

Fig. 3 is a schematic plan view illustrating a trim material 10 in accordance with the present invention having a fabric printed with the design "i b r" with a retroreflective layer thereon. The color choice depends on the type of required contrast. For example, if a trim looking as an uniform gray color like the aluminum color is needed, a dark-gray design is printed upon the fabric. The contrast between printing and aluminum color will be soft, sufficient for reading the "i b r " writing but without influence on the plain gray color of the trim.

Fig. 4 is an extension of the microscopic plan view of a portion of letter " i " shown in fig. 3 of the retroreflective product. The dark-gray color 5 of the letter "i" is visible around the glass microspheres 1. Generally, the surface between the microspheres 1 is more than 60% of the total surface of the trim. Therefore, the printed color which is deposited between the beads seems as a continuous line and consequently the writing is visible in a non-interrupted form.

Fig. 5 shows a safety jacket 12 displaying a retroreflective article 10. Safety vests often are worn by road workers and drivers out of vehicles which are stationary on the roadway. Although the safety jacket 12 has been chosen for illustration purposes, the article of clothing of the invention may come in a variety of forms. "Article of clothing" means an item including shirts, sweaters, coats, pants, gloves, bags, shoes, etc.

The invention will be further explained by the following illustrative examples, whose purpose is showing the features and advantages of this invention. However, the ingredients and specific amounts recited therein, as well as other conditions and details, are not intended to be limiting the scope of this invention. Unless otherwise indicated, all amounts expressed in the examples are in parts by weight.

### EXAMPLE 1

In Example 1, glass spheres 1 with a refractive index of 1.93 and a diameter from 45 up to 100 micrometers were cascaded on a kraft paper covered with a self-adhesive film producing a densely monolayer of glass beads embedded in the binder layer. Suitable bonding adhesives include, for example, urethanes, rubbers, silicones and acrylics. Alternative suitable bonding adhesives will be apparent to those skilled of the art, given the benefit of this disclosure. Aluminum is then vapor-coated over the exposed surface of the beads until a specularly visually continuous coating is formed. The exposed beads as well as the exposed surface of the adhesive coating are thus reflectorized.

Thereafter, over a release silicon paper, a binder 11 was applied consisting of the following composition:

| Ingredients | Parts by Weight |
|---|---|
| Transparent Polyurethane resin | 100 |
| Melamine curing agent | 3 |
| Isocyanate curing agent ("Icaplink X3" from Icap) | 5 |
| Methyl Ethyl Ketone | 40 |
| formulation 1 | |

This composition was applied at a coating weight sufficient to give a dry film of about 20 to 50 g/sqm, after which solvent was evaporated from the coating by forced air drying at 110 °C. Then, the transparent polyurethane film 11 was detached from the release paper and laminated on one face with printed letters "i b r " on the base textile 8 and on the other face with the metallized beads supported by the temporary sheet 9. After or before curing the resin at about 150°C. the sheet 9 was stripped.

### EXAMPLE 2

A comparative example was prepared using the same base textile without the printed design shown in Fig. 3 and the same conditions and formulation indicated in Example 1.

Each of these examples 1 and 2 was laundered and tested simultaneously. The initial reflectivity of the two examples was the same, about 450 cd/(lux m), and the final reflectivity after 50 laundering cycles at 60°C was about 250 cd(lux m), a value higher than required by UNI EN 471:1994 standard.

### EXAMPLE 3

The retroreflective product of this example was made as set forth above, except for the difference in the temporary carrier web 9 which was a temperature sensitive adhesive 3 supported by a polyester sheet 4. The adhesive used was a blend of polyethylene containing generally more than 8% of poly-vinyl-acetate .

### EXAMPLE 4

The monolayer of glass microspheres was embedded in a carrier sheet as described in Example 3. Then aluminum was vapor-coated over the exposed surface of the beads as described in Example 1. A transparent polyurethane binder solution indicated in formulation 1 was directly knife-coated upon the metallized beads after which solvent was evaporated from the coating by forced air drying at 110 °C. The polyurethane film 11 was laminated with the printed base textile and cured. The sheet 9 was then stripped.

### EXAMPLE 5

The monolayer of glass microspheres was embedded in a carrier sheet as described in Example 3. Then the beads were knife-coated with about a 10% solution of a transparent acrylic self-adhesive containing 2% of isocyanate curing agent. The dry resin was deposited mainly between the microspheres. Aluminum was then vapor-coated over the exposed surface of the beads and over the thin acrylic layer until a specularly visually continuous coating was formed. The subsequent operations were described in Example 1.

### EXAMPLE 6

The retroreflective product of this example was made as described in Example 1, except for the difference in the printed textile. A nonwoven polyester base was printed with sublimate pigments supported by a release paper, at a temperature close to 180°C, because a maximum yield of the transferring but also a partial transferring of the design at lower temperatures may give a satisfactory aesthetic design on the final product. With this sublimate printing it was in fact possible to print a design containing many shapes and colors while maintaining the precision of the combination of the colors. The subsequent operations were described in Example 1. In this example, a multicolored effect is obtained without an homogenous gray color look.

## Claims

1. Method for producing a printed retroreflective textile material, comprising the following steps:
(a) partially embedding, in a self-adhesive or thermo-adhesive supported by a carrier sheet (9) made of paper or polymer foil, a monolayer of transparent glass microspheres (1) at a depth averaging between 20% and 50% of the diameters of the microspheres (1);
(b) laying an aluminum film (2) onto the microspheres (1) by vacuum deposition;
(c) coating a two-component transparent polyurethane adhesive layer (11) onto the microspheres (1) and drying the adhesive layer (11);
(d) while the polyurethane adhesive layer (11) is partially cured, applying a base textile material (8) with a design (5) printed thereon; and
(e) stripping away the support foil (9) of the microspheres (1) and curing the textile material (8) covered with the printed microspheres (1),
**characterised in that**, in said step (e) of stripping away the support foil (9) of the microspheres (1), the aluminum film on the surface between each of the microspheres (1) is completely pulled off, while the aluminium film over the microspheres (1) and between the microspheres (1) and the adhesive layer (11) remains attached to the microspheres (1).

2. Method according to claim 1, **characterized in that** the two-component transparent adhesive (11) has a wet thickness of 125 microns.

3. Method according to claim 1, **characterized in that** the adhesive layer (11) is dried at 80 °C.

4. Method according to claim 1, **characterized in that** the curing step of the textile material occurs at 150 °C.

5. Method according to claim 1, **characterized in that** the printed design (5) upon the base (9) is a sublimate pigments design (5) printed on a fabric (8).

6. Method according to claim 5, **characterized in that** said fabric (8) is made of polyester.

7. Method according to claim 1, **characterized in that** the printed design (5) upon the base (9) is a printed design (5) normally obtained with textile techniques like screenprinting or rotary-printing systems.

8. Method according to claim 1, **characterised in that** the layer of microspheres (1) is deposited upon an acrylic self-adhesive film (9).

9. Method according to claim 1, **characterised in that** the layer of microspheres (1) is deposited upon a polyethylene-polyvinyl acetate thermo-adhesive film (9).

10. Method according to claim 9, **characterised in that** the thermo-adhesive film (9) with the glass microspheres (1) embedded is coated with a thin layer of an acrylic adhesive before the aluminum vacuum deposition.

11. Method according to claim 1, **characterised in that** the carrier sheet (9) of the microspheres (1), when removed, pulls off the aluminum surface (2) between the glass microspheres (1).

12. Method according to claim 1, **characterised in that** the aluminium coating (2) remains only at the bottom of the glass microspheres (1).

13. Method according to claim 1, **characterised in that** the flexible binder resin (11) is transparent.

14. Method according to claim 9, **characterised in that** the microspheres (1) have a refractive index between 1.4 and 2.7 and have an average diameter between 30 and 150 microns.

15. Method according to claim 1, **characterised in that** the textile material comprises a visible network of printed points between the microspheres (1) which is seen by an observer as a continuous image.

16. Method according to claim 1, wherein a printed textile base, a transparent binder synthetic resin and a surface between the glass microspheres (1) without aluminum are joined together.

17. Method according to claim 1 adapted to produce a printed product having washing resistance and retroreflective characteristics according to the unifying standard UNI EN 471:1994 on high visibility warning clothing.

## Patentansprüche

1. Verfahren zur Herstellung eines bedruckten, retroreflektierenden Textilmaterials mit folgenden Phasen:
(a) Teilweise in einem selbstklebenden oder thermoadhäsiven Film, der durch eine Trägerfolie (9) getragen wird, die aus Papier oder Polymerfolie besteht, eine Schicht aus transparenten Mikrosphären aus Glas (1) in einer durchschnittlichen Tiefe zwischen 20% und 50% der Durchmesser der Mikrosphären (1) aufnehmen;
(b) Durch Vakuumbedampfung einen Aluminiumfilm (2) auf den Mikrosphären (11) anbringen;
(c) Die Mikrosphären (1) mit einer Klebschicht aus transparentem Zwei-Komponenten-Polyurethan (11) beschichten, und die Klebschicht (11) abtrocknen;
(d) Während die Polyurethan-Haftschicht (11) teilweise vulkanisiert, ein Basistextilmaterial (8) mit einer auf diesem gedruckten Zeichnung (2) auftragen; und
(e) Die Trägerfolie (9) der Mikrosphären (1) entfernen, und das Textilmaterial (8) vulkanisieren, das von den bedruckten Mikrosphären (1) bedeckt ist,
das **dadurch gekennzeichnet ist, dass** in der genannten Phase (e) der Entfernung der Trägerfolie (9) der Mikrosphären (1) der Aluminiumfilm auf der Oberfläche zwischen jeder der Mikrosphären (1) vollständig abgezogen wird, während der Aluminiumfilm auf den Mikrosphären (1) und zwischen den Mikrosphären (1) und die Klebschicht (11) an den Mikrosphären (1) haften bleiben.

2. Verfahren gemäß Patentanspruch 1, der **dadurch gekennzeichnet ist, dass** der transparente Zwei-Komponenten-Aufkleber (11) im feuchten Zustand eine Stärke von 125 Mikron hat.

3. Verfahren gemäß Patentanspruch 1, das **dadurch gekennzeichnet ist, dass** die Klebschicht (11) bei 80°C getrocknet wird.

4. Verfahren gemäß Patentanspruch 1, das **dadurch gekennzeichnet ist, dass** die Vulkanisierungsphase des Textilmaterials bei 150°C erfolgt.

5. Verfahren gemäß Patentanspruch 1, das **dadurch gekennzeichnet ist, dass** die auf der Basis (9) aufgedruckte Zeichnung (5) eine Zeichnung mit Sublimationspigmenten (5) ist, die auf einen Stoff (8) aufgedruckt wird.

6. Verfahren gemäß Patentanspruch 5, das **dadurch gekennzeichnet ist, dass** der genannte Stoff (8) aus Polyester besteht.

7. Verfahren gemäß Patentanspruch 1, das **dadurch gekennzeichnet ist, dass** die auf der Basis (9) aufgedruckte Zeichnung (5) eine gedruckte Zeichnung (5) ist, die normalerweise mit Textiltechniken wie Siebdruck oder Rotationsdrucksystemen erhalten wird.

8. Verfahren gemäß Patentanspruch 1, das **dadurch gekennzeichnet ist, dass** die Schicht der Mikrosphären (1) auf einem selbstklebendem Acrylfilm (9) abgelagert wird.

9. Verfahren gemäß Patentanspruch 1, das **dadurch gekennzeichnet ist, dass** die Schicht der Mikrosphären (1) auf einem thermoadhäsiven Polyäthylen-Polyvinyl-Film (9) abgelagert wird.

10. Verfahren gemäß Patentanspruch 9, das **dadurch gekennzeichnet ist, dass** der thermoadhäsive Film (9) mit den aufgenommenen Mikrosphären aus Glas (1) vor der Aluminium-Vakuumbedampfung mit einer dünnen Acrylklebschicht beschichtet wird.

11. Verfahren gemäß Patentanspruch 1, das **dadurch gekennzeichnet ist, dass** die Trägerfolie (9) der Mikrosphären (1), wenn sie entfernt wird, die Aluminiumfläche (2) zwischen den Mikrosphären aus Glas (1) abzieht.

12. Verfahren gemäß Patentanspruch 1, das **dadurch gekennzeichnet ist, dass** die Aluminiumbeschichtung (2) nur im Hintergrund der Mikrosphären aus Glas (1) bleibt.

13. Verfahren gemäß Patentanspruch 1, das **dadurch gekennzeichnet ist, dass** das bindende flexible Harz (11) transparent ist.

14. Verfahren gemäß Patentanspruch 9, das **dadurch gekennzeichnet ist, dass** die Mikrosphären (1) einen Brechungsindex zwischen 1,4 und 2,7 und einen durchschnittlichen Durchmesser zwischen 30 und 150 Mikron haben.

15. Verfahren gemäß Patentanspruch 1, das **dadurch gekennzeichnet ist, dass** das Textilmaterial ein sichtbares Netz bedruckter Punkte zwischen den Mikrosphären (1) einschließt, das von einem Beobachter als kontinuierliche Abbildung gesehen wird.

16. Verfahren gemäß Patentanspruch 1, in dem eine bedruckte Textilbasis, ein transparentes, bindendes, synthetisches Harz und eine Oberfläche zwischen den Mikrosphären aus Glas (1) ohne Aluminium vereint werden.

17. Verfahren gemäß Patentanspruch 1, das dazu dient, ein bedrucktes Produkt herzustellen, das waschecht ist und retroreflektierende Eigenschaften gemäß der Vereinheitlichungsnorm Deutsche Fassung DIN EN 471:1994 für hoch sichtbare Warnkleidung hat.

## Revendications

1. Procédure pour produire un matériel textile rétro-réfléchissant imprimé, comprenant les phases suivantes :
(a) incorporer partiellement, dans un auto-adhésif ou thermo-adhésif soutenu par une feuille portante (9) fait de papier ou feuille polymérique, un monocouche de microsphères de verre transparentes (1) à une profondeur moyenne entre 20% et 50% des diamètres des microsphères (1) ;
(b) poser une pellicule d'aluminium (2) sur les microsphères (11) par dépôt à vide ;
(c) revêtir une couche adhésive de polyuréthanne transparent bi-composant (11) sur les microsphères (1) et sécher la couche adhésive (11) ;
(d) tandis que la couche adhésive de polyuréthanne (11) vulcanise partiellement, appliquer un matériel textile de base (8) avec un dessin (5) imprimé sur celui-ci ; et
(e) enlever la feuille de support (9) des microsphères (1) et vulcaniser le matériel textile (8) couvert par les microsphères (1) imprimées, **caractérisée par le fait que**, dans ladite phase (e) d'enlever la feuille de support (9) des microsphères (1), la pellicule d'aluminium sur la surface entre chacune des microsphères (1) est complètement éliminée, tandis que la pellicule d'aluminium sur les microsphères (1) et entre les microsphères (1) et la couche adhésive (11) reste attachée aux microsphères (1).

2. Procédure selon la revendication 1, **caractérisée par le fait que** l'adhésif transparent bi-composant (11) a une épaisseur humide de 125 microns.

3. Procédure selon la revendication 1, **caractérisée par le fait que** la couche adhésive (11) est séchée à 80 °C.

4. Procédure selon la revendication 1, **caractérisée par le fait que** la phase de vulcanisation du matériel textile s'effectue à 150 °C.

5. Procédure selon la revendication 1, **caractérisée par le fait que** le dessin (5) imprimé sur la base (9) est un dessin à pigments sublimés (5) imprimé sur un tissu (8).

6. Procédure selon la revendication 5, **caractérisée par le fait que** ledit tissu (8) est fait de polyester.

7. Procédure selon la revendication 1, **caractérisée par le fait que** le dessin (5) imprimé sur la base (9) est un dessin imprimé (5) obtenu normalement avec des techniques textiles telles que sérigraphie ou systèmes d'impression rotatifs.

8. Procédure selon la revendication 1, **caractérisée par le fait que** la couche de microsphères (1) est déposée sur une pellicule auto-adhésive acrylique (9).

9. Procédure selon la revendication 1, **caractérisée par le fait que** la couche de microsphères (1) est déposée sur une pellicule thermo-adhésive de polyéthylène-polyvinyle acétate (9).

10. Procédure selon la revendication 9, **caractérisée par le fait que** la pellicule thermo-adhésive (9) avec les microsphères de verre (1) incorporées est revêtue par une couche fine d'un adhésif acrylique avant le dépôt sous vide d'aluminium.

11. Procédure selon la revendication 1, **caractérisée par le fait que** la feuille portant (9) des microsphères (1), quand elle est éliminée, enlève la surface d'aluminium (2) entre les microsphères de verre (1).

12. Procédure selon la revendication 1, **caractérisée par le fait que** le revêtement d'aluminium (2) reste seulement sur le fond des microsphères de verre (1).

13. Procédure selon la revendication 1, **caractérisée par le fait que** la résine liante flexible (11) est transparente.

14. Procédure selon la revendication 9, **caractérisée par le fait que** les microsphères (1) ont un indice de réfraction entre 1,4 et 2,7 et ont un diamètre moyen entre 30 et 150 microns.

15. Procédure selon la revendication 1, **caractérisée par le fait que** le matériel textile comprend un réseau visible de points imprimés entre les microsphères (1) qui est vu par un observateur comme image continue.

16. Procédure selon la revendication 1, dans laquelle une base textile imprimée, une résine synthétique liante transparente et une surface entre les microsphères de verre (1) sans aluminium sont unies ensemble.

17. Procédure selon la revendication 1, apte à produire un produit imprimé ayant une résistance au lavage et caractéristiques rétro-réfléchissantes selon la norme d'unification UNI EN 471:1994 sur des vêtements d'avertissement à haute visibilité.
